# EUROPEAN PATENT APPLICATION

(11) **EP 4 394 385 A1**
(43) Date of publication of application: **03.07.2024**
(21) Application number: 22861101.8
(22) Date of filing: 03.08.2022
(51) Int. Cl.: G01N 35/00

(54) **AUTOMATED ANALYSIS DEVICE**

(30) Priority: 27.08.2021 JP 2021138598
(71) Applicant: HITACHI HIGH-TECH CORPORATION, Tokyo 105-6409 (JP)
(72) Inventor: HIRAMA, Hiromi, Tokyo 105-6409 (JP); TAKIZAWA, Hikaru, Tokyo 105-6409 (JP); KAWAHARA, Tetsuji, Tokyo 105-6409 (JP); IIJIMA, Masahiko, Tokyo 105-6409 (JP); AZUMA, Shinji, Tokyo 105-6409 (JP)
(74) Representative: MERH-IP Matias Erny Reichl Hoffmann Patentanwälte PartG mbB
(86) International application number: PCT/JP2022/029846
(87) International publication number: WO 2023/026810

(57) **Abstract**

Prior to dispensing a sample into a reaction vessel 1 and performing sample measurement, an automatic analyzer dispenses pure water into the reaction vessel to perform water blank measurement, corrects absorbance data of a reaction solution of the sample and a reagent measured by sample measurement with water blank absorbance data measured by the water blank measurement, and performs an analytical sequence that analyzes the sample based on the corrected absorbance data, and also determines a water quality abnormality of a reaction tank circulating water 112 based on the water blank absorbance data measured by the water blank measurement. Accordingly, water quality abnormality is detected in a reaction tank circulating water without adding a dedicated mechanism or confirmation operation.

## Description

### Technical Field

The present invention relates to an analyzer for a clinical examination that performs qualitative and quantitative analysis of a biological sample such as blood or urine, and particularly relates to an automatic analyzer including a reaction tank circulation flow path.

### Background Art

For example, in a biochemical automatic analyzer, in order to perform component analysis of a biological sample such as serum or urine, a test sample and a reagent are caused to react with each other in a reaction vessel, and a change in color tone or turbidity caused by the reaction is optically measured by a photometry unit such as a spectral photometer at regular time intervals. In order to suppress a fluctuation in the chemical reaction rate of the sample and the reagent in the reaction vessel depending on a temperature fluctuation, the reaction vessel is immersed in constant temperature water where the temperature is stable. This constant temperature water is circulated through a heater and a cooling device to keep the reaction vessel at the stable temperature.

However, when bubbles are mixed in the constant temperature water and cross an optical axis during measurement of absorbance data of the sample in the reaction vessel, light is scattered or absorbed by the bubbles such that the measured absorbance data is a value different from that of a typical chemical reaction. Therefore, the automatic analyzer includes a degassing unit in a circulation flow path to suppress the formation of bubbles. When the degassing performance of the degassing unit decreases, bubbles are formed in circulating water.

However, the presence of bubbles does not always cause an abnormal value of an analysis result, and when an examination item is an item where absorbance values at two wavelengths are acquired to calculate a concentration using a difference therebetween, even if the measured absorbance values are affected by bubbles, the effects of the bubbles can be suppressed by acquiring the difference. Therefore, there is a case where an increase in the amount of the bubbles cannot be noticed from the analysis result.

PTL 1 discloses that whether disturbance related to a photometry portion of a reaction vessel occurs is determined by measuring light at a wavelength where there is no absorption by a reaction solution multiple times. Examples of the disturbance include scratches, contamination, and bubble attachment of the reaction vessel.

PTL 2 discloses that, when absorbance data in the same reaction vessel is measured at multiple points at predetermined time intervals in a chronological manner and a spike-like change in absorbance is detected, alarm information is added to the measurement data, and it is determined that there is an effect of an increase in the amount of foreign matter such as bubbles or scale in constant temperature water based on an alarm occurrence frequency.

PTL 3 discloses that reaction tank water is dispensed into a reaction vessel during an operation of an automatic analyzer and absorbance of the reaction tank water is measured to determine the water quality of the reaction tank water such that supply and drainage of the reaction tank water are performed depending on the water quality determination.

### Citation List

### Patent Literature

PTL 1: JPH08-005562A
PTL 2: JP2000-039400A
PTL 3: JP2020-159804A

### Summary of Invention

### Technical Problem

A main factor for the mixing of bubbles in constant temperature water is a decrease in the degassing performance of the degassing unit for the constant temperature water. When the concentration of dissolved oxygen in the reaction tank circulating water increases due to a decrease in the degassing performance of the degassing unit, a state where bubbles are likely to be formed is established. However, typically, the degassing unit is disposed in the analyzer, and it is difficult to frequently access the degassing unit. Further, the degassing unit is connected to a flow path, and thus it is difficult to check the internal state of the degassing unit.

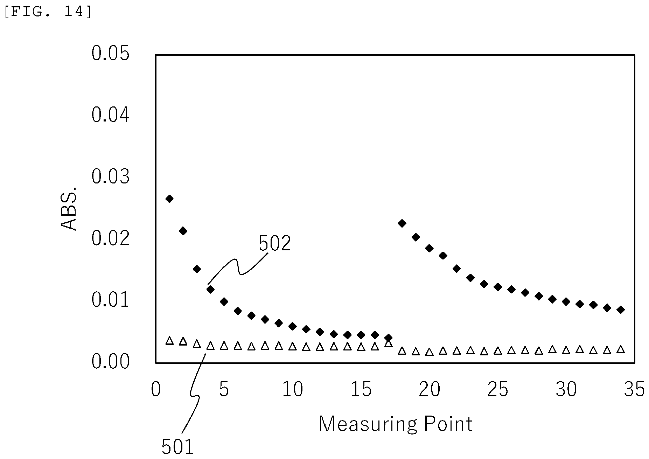

In PTL 1 and PTL 2, an abnormality is determined from a change in absorbance at a wavelength where there is no absorption for a reaction solution obtained by a chemical reaction of a sample and a reagent. Fig. 14 illustrates the process of a reaction of creatinine at a sub-wavelength. Even when an analysis item is not a photometry target and is the measurement at a wavelength where there is originally no absorption, a change in absorbance may occur depending on components in a specimen. When there is no absorption and stable values are measured as in a graph 501 (Δ), there is no problem. However, depending on components in a specimen, a change in absorbance may occur as in a graph 502 (+). This way, in a reaction solution of a specimen and a reagent, a change in absorbance may occur due to an unintended side reaction. Therefore, it is difficult to accurately perform abnormality determination.

In PTL 3, the water quality abnormality of the reaction tank circulating water is determined by measuring the reaction tank water (alternatively, a standard sample having a known absorbance). However, during an operation, dedicated measurement for the water quality determination of the reaction tank circulating water is performed, and the examination efficiency of the automatic analyzer may decrease.

An object of the present invention is to implement an automatic analyzer that can detect a water quality abnormality where bubbles are likely to be formed in reaction tank circulating water using an absorbance value obtained by an operation without adding a dedicated mechanism or measurement.

### Solution to Problem

An automatic analyzer according to one embodiment of the present invention includes: a reaction tank; a reaction disk that holds a reaction vessel in a state of being immersed in a reaction tank circulating water in the reaction tank; a circulation flow path that adjusts a temperature of the reaction tank circulating water from the reaction tank and returns the reaction tank circulating water to the reaction tank; a degassing device provided in the circulation flow path to degas the reaction tank circulating water; a photometer including a light source lamp and a photodetector that detects light emitted from the light source lamp and transmitted through the reaction vessel; and a control unit that controls a sequence of analyzing a sample and analyzes the sample, in which, prior to dispensing the sample into the reaction vessel and performing sample measurement, the control unit dispenses pure water into the reaction vessel to perform water blank measurement, corrects absorbance data of a reaction solution of the sample and a reagent measured by sample measurement with water blank absorbance data measured by the water blank measurement, and analyzes the sample based on the corrected absorbance data, and the control unit determines a water quality abnormality of the reaction tank circulating water based on the water blank absorbance data measured by the water blank measurement.

### Advantageous Effects of Invention

According to the present invention, a water quality abnormality of reaction tank circulating water can be detected without adding a dedicated mechanism or check operation. Problems, configurations, and effects other than those described above will be clarified by the description of the following embodiments.

### Brief Description of Drawings

[Fig. 1] Fig. 1 is a configuration diagram illustrating an automatic analyzer.
[Fig. 2A] Fig. 2A illustrates an example of a reaction water circulation flow path.
[Fig. 2B] Fig. 2B illustrates a configuration example of a degassing device.
[Fig. 3] Fig. 3 is a characteristic diagram (normal) of a water blank absorbance range.
[Fig. 4] Fig. 4 is a characteristic diagram (abnormality) of a water blank absorbance range.
[Fig. 5] Fig. 5 is a diagram illustrating a correlation between a dissolved oxygen concentration and a water blank absorbance range average value.
[Fig. 6] Fig. 6 is a diagram illustrating a correlation between a dissolved oxygen concentration and a water blank absorbance range standard deviation.
[Fig. 7] Fig. 7 is a flowchart for determining a water quality abnormality.
[Fig. 8] Fig. 8 is a functional block diagram for generating and updating a learning model.
[Fig. 9A] Fig. 9A illustrates an example of maintenance history data.
[Fig. 9B] Fig. 9B illustrates an example of alarm information data.
[Fig. 10] Fig. 10 illustrates an example of a learning model using a neural network.
[Fig. 11] Fig. 11 illustrates an example of GUI.
[Fig. 12] Fig. 12 illustrates an example of GUI.
[Fig. 13] Fig. 13 illustrates an example of GUI.
[Fig. 14] Fig. 14 is a diagram provided to explain a problem of the related art.

### Description of Embodiments

Hereinafter, one embodiment of the present invention will be described in detail with reference to the drawings.

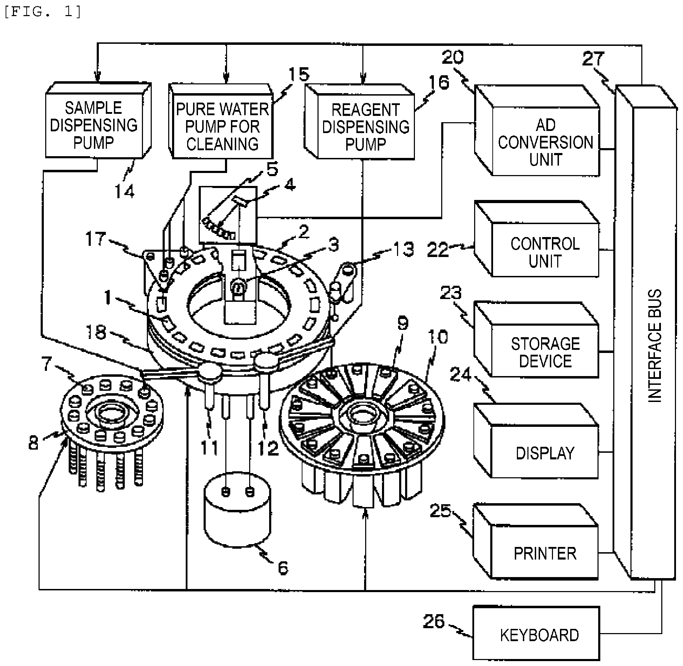

An operation of an automatic analyzer will be described based on a configuration of the automatic analyzer illustrated in Fig. 1. A control of an analytical sequence in the automatic analyzer and an analysis process of receiving a detection signal from a photometer described below are performed by a control unit 22.

First, reaction vessels 1 are cleaned by a cleaning mechanism 17 and a pure water pump for cleaning 15. Next, regarding each of the reaction vessels 1, pure water is dispensed into the reaction vessel, and the measurement is performed by a photometer configured by a light source lamp 3, a diffraction grating for spectroscopy 4, and a photodetector 5 to acquire photometry data (water blank value). Next, pure water is removed from the reaction vessel 1.

Next, a sample in a sample cup 7 placed on a sample disk 8 is dispensed into the reaction vessel 1 placed on a reaction disk 2 using a sample dispensing mechanism 11 and a sample dispensing pump 14. Likewise, a reagent in a reagent bottle 9 placed on a reagent disk 10 is dispensed into the reaction vessel 1 by a reagent dispensing mechanism 12 and a reagent dispensing pump 16, and both of the sample and the reagent are stirred using a stirring mechanism 13. In the reaction solution in the reaction vessel 1, color development of the chemical reaction is measured by the photometer at regular time intervals determined according to the rotation of the reaction disk 2. In order to stably accelerate the chemical reaction, the reaction vessel 1 is kept at a constant temperature by a constant temperature water supply device 6. After completion of the measurement, the reaction vessel 1 is cleaned by the cleaning mechanism 17 and the pure water pump for cleaning 15 and is used for next measurement of the sample.

A configuration of the photometer will be described. Light emitted from the light source lamp 3 transmits through the reaction vessel 1 and is separated into respective wavelength components by the diffraction grating for spectroscopy 4. Before the separation, the required number of the photodetectors 5 are installed and disposed at positions corresponding to wavelengths required for the measurement. The light incident on the photodetector 5 is converted into photoelectricity to generate a current in proportion to the light intensity, that is, the number of photons in the light. This current is called a photocurrent. In order to obtain an electric signal in proportion to a concentration of a component to be measured in a sample, the concentration is converted into a digital value by an AD conversion unit 20, is stored in a storage device 23 via an interface bus 27, and is analyzed by the control unit 22.

In order to calculate the concentration of the sample, absorbance data corrected by the water blank value is used. The absorbance varies due to the effect of scratches or attachment of contamination of a sample container and a change in the light intensity of the light source lamp. Therefore, in general, the water blank value is acquired immediately before the sample measurement.

This way, in the automatic analyzer, the reaction vessel 1 is repeatedly used in order of the cleaning, the water blank measurement, and the sample measurement. In the water blank measurement, blank water (purified water, pure water) is dispensed into the reaction vessel 1, and the measurement is performed at a timing at which the reaction vessel 1 crosses the front of the photometer due to the rotation operation of the reaction disk 2. Since the purified water has low wettability, bubbles are likely to be attached to a wall of the reaction vessel 1. When bubbles are attached to an inner wall of the reaction vessel, accurate absorbance cannot be obtained. Therefore, in the water blank measurement, water is discharged into the reaction vessel 1 and the stirring operation is not also performed to suppress the formation of bubbles. In addition, the surroundings of the reaction vessel 1 are kept at a constant temperature of 37°C by circulating the reaction tank circulating water. When the temperature of the blank water increases, dissolved oxygen is likely to form bubbles, and thus the measurement is completed within a short period of time. Note that, in general, the measurement is performed multiple times in consideration of a variation in measured value. In the water blank absorbance measurement, the reaction vessel does not include a factor that causes a variation in absorbance. Therefore, a stable measured value can be obtained.

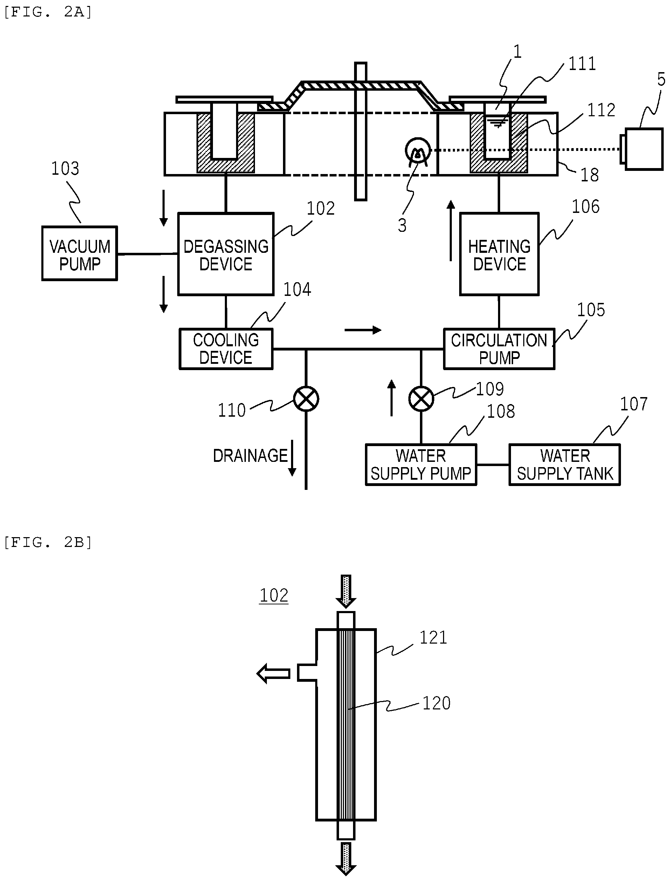

Fig. 2A is an example of a circulation flow path of the reaction tank circulating water. The reaction vessel 1 is disposed on a circumference in a reaction tank 18. The reaction tank 18 is filled with reaction tank circulating water 112. The reaction tank circulating water 112 is circulated in order of the reaction tank 18, a degassing device 102, a cooling device 104, a circulation pump 105, and a heating device 106 by the circulation pump 105. In order to stably perform a chemical reaction of a reaction solution 111 in the reaction vessel 1, the temperature of the reaction tank circulating water 112 is kept constant by the action of the cooling device 104 and the heating device 106. The water level of the reaction tank circulating water 112 decreases by evaporation, overflow from the reaction tank 18, or the like. In this case, water is supplied from a water supply tank 107 by a water supply pump 108.

Bubbles in the reaction tank circulating water 112 are disturbances in the absorbance measurement. Therefore, in the circulation flow path of Fig. 2A, an increase in the concentration of dissolved oxygen in the circulating water is prevented by constantly degassing the reaction tank circulating water 112 using the degassing device 102. Further, a case where the formed bubbles are attached to the reaction vessel 1 or an optical axis window is assumed, and a surfactant is generally added to the reaction tank circulating water 112.

Fig. 2B illustrates a configuration example of the degassing device 102. In the degassing device 102, a container 121 is provided to surround a flow path 120 of the reaction tank circulating water 112 containing a hollow fiber, and the container 121 is connected to a vacuum pump 103. By adjusting the internal pressure of the container 121 to be negative using the vacuum pump 103, the reaction tank circulating water 112 of the flow path 120 is degassed. In the degassing device 102, for example, when the hollow fiber is cut or when clogging occurs in the flow path 120, the reaction tank circulating water 112 may pass through the degassing device 102 in a state where the reaction tank circulating water 112 is not appropriately degassed. Alternatively, when the container 121 is cracked such that airtightness deteriorates, there is a case where the degassing of the reaction tank circulating water 112 cannot be sufficiently performed.

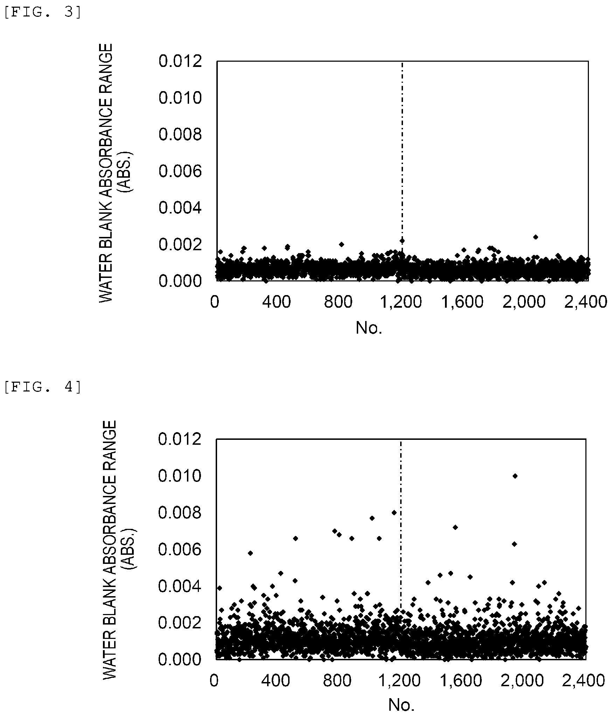

When the dissolved oxygen concentration in the reaction tank circulating water 112 is kept at 5.0 mg/L or less, a variation in absorbance caused by bubbles is not seen. With reference to Figs. 3 and 4, the effect of the dissolved oxygen concentration on a water blank absorbance range will be described. Figs. 3 and 4 illustrate results obtained by measuring the water blank value three times and plotting a range thereof (maximum value - minimum value). When photometry data that is affected by the bubbles in the reaction tank circulating water 112 is present among the photometry data obtained by the three times of measurement, the absorbance range increases. This measurement is performed 2,400 times. In both of Figs. 3 and 4, 1,200 times of measurements in the first half include measurements for light at six wavelengths (340, 415, 480, 546, 600, and 700 nm), and 1,200 times of measurements in the second half are only measurements for light at 340 nm. In either case, the measurements in the first half and the measurements in the second half show the same tendency, and the effect of the selection of the wavelength was not recognized.

Fig. 3 illustrates a measurement example when a degassing mechanism operates normally, in which the dissolved oxygen concentration in the reaction tank circulating water was 4.7 mg/L. The water blank absorbance range (ABS.) is roughly a value of 0.001 or less and is suppressed to about 0.002 at a maximum. At this time, an average value and a standard deviation of the water blank absorbance range were 6.9 mg/L and 2.7 mg/L, respectively.

Fig. 4 illustrates a measurement result when the dissolved oxygen concentration was 6.5 mg/L. Fig. 4 illustrates a state where bubbles are formed in the reaction tank circulating water and randomly cross the optical path of the photometer. The sizes of the floating bubbles are various, and a change amount of absorbance varies depending on the size or the amount. Therefore, the width of the distribution of the water blank absorbance range increases. In the present result, the maximum value of the water blank absorbance range (ABS.) is about 0.01, but the range may exceed 0.01. At this time, an average value and a standard deviation of the water blank absorbance range were 11.5 mg/L and 7.7 mg/L, respectively.

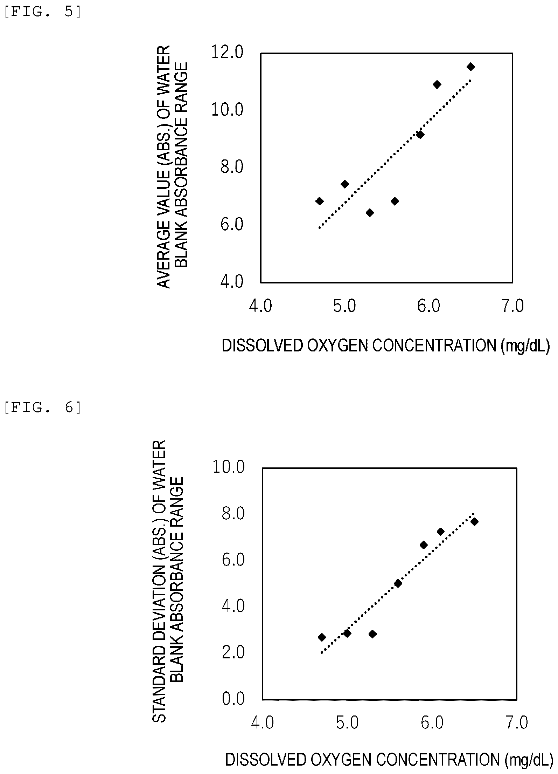

In Fig. 5, the average value of the water blank absorbance range (ABS.) is calculated from the results acquired by changing the dissolved oxygen concentration in the reaction tank circulating water in 4.7 to 6.5 mg/L and is plotted. In addition, in Fig. 6, the standard deviation of the water blank absorbance range (ABS.) is plotted. In either case, a correlation with the dissolved oxygen concentration is recognized. This way, it can be seen that the state of the dissolved oxygen concentration can be detected by monitoring the water blank absorbance range of the reaction tank circulating water 112. During this detection, the water blank absorbance range shows the same tendency without depending on the measurement wavelength. Therefore, during the monitoring, photometry data at different wavelengths may be mixed. The water blank measurement is performed with light at a wavelength used for an examination. Therefore, the water blank measurement is performed at different wavelengths according to examination contents to be requested. Therefore, the water blank absorbance range does not depend on the measurement wavelength, which is an advantageous characteristic. Of course, the water quality of the reaction tank circulating water 112 may be monitored using only data at a specific wavelength.

As an index for the dissolved oxygen concentration, the average value (Fig. 5) or the standard deviation (Fig. 6) of the water blank absorbance range may be used, or an index derived therefrom may also be used. For example, a frequency at which a set water blank absorbance range (the average value or the standard deviation) is exceeded can also be used as the index.

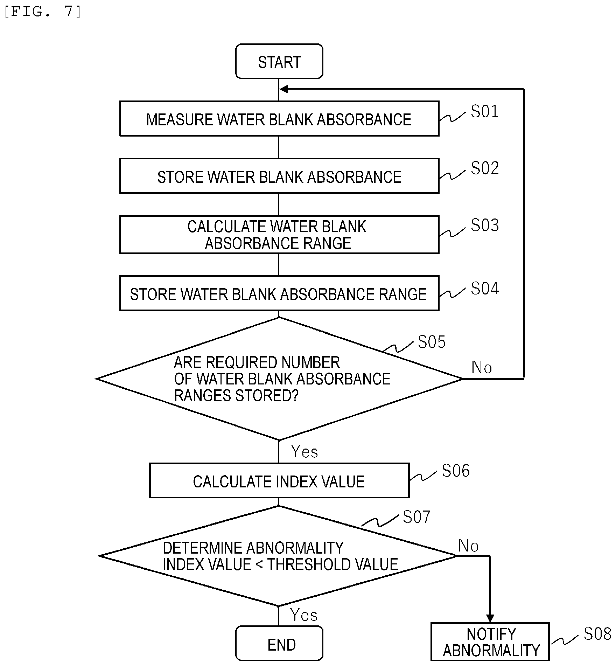

Next, the details of a process in which the automatic analyzer determines a water quality abnormality of the reaction tank circulating water based on the index for the water blank absorbance range will be described. Fig. 7 is a flowchart for determining the water quality abnormality. This process is performed by allowing the control unit 22 to activate a reaction tank circulating water monitoring program and operating the hardware of the automatic analyzer in combination.

First, the control unit 22 measures a water blank absorbance (S01), and stores the measured water blank absorbance in the storage device 23 (S02). A water blank absorbance range for each water blank measurement is calculated from the obtained photometry data (S03), and is stored in the storage device 23 (S04). This water blank absorbance measurement is performed as the water blank measurement in the analytical sequence of the automatic analyzer described above with reference to Fig. 1. Therefore, by allowing the control unit 22 to perform a reaction tank circulating water monitoring function, new measurement therefor is not required.

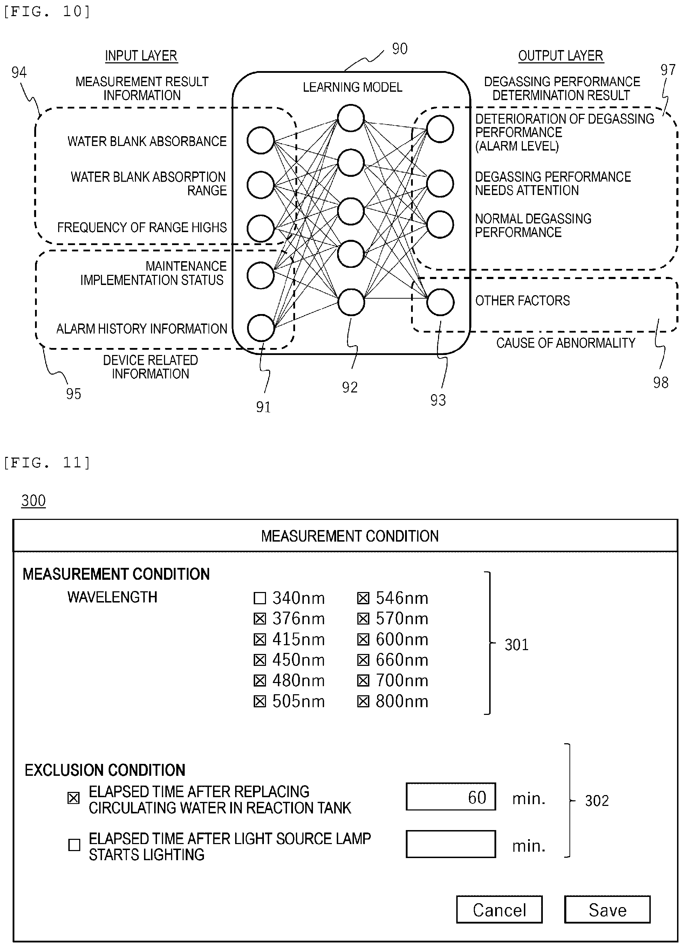

Fig. 11 illustrates an example of GUI (Graphical User Interface) for setting the water blank absorbance measurement used for the reaction tank circulating water monitoring function. A measurement condition setting screen 300 includes a measurement condition setting unit 301 and an exclusion condition setting unit 302. Regarding a wavelength at which the measurement can be performed using the photometer of the analyzer, the measurement condition setting unit 301 sets a wavelength at which the water blank absorbance measurement is used for the calculation of the index. In this example, wavelengths at which the measurement can be performed using the photometer are illustrated, and the wavelengths can be selected by a user. An exclusion condition 302 sets a water blank absorbance measurement excluded from the calculation of the index. For example, immediately after replacing the reaction tank circulating water, the degassing by the degassing device 102 is insufficient, and the dissolved oxygen concentration in the reaction tank circulating water 112 is in a state of being higher than that in a steady state. Therefore, photometry data measured within a predetermined time after replacing the circulating water can be set not to be used for the calculation of the index. Alternatively, immediately after the start of the lighting of the light source lamp 3, the light intensity from the light source lamp 3 may be unstable. Therefore, photometry data measured within a predetermined time after lighting the light source lamp 3 can be set not to be used for the calculation of the index.

Whether a required number of pieces of data of the water blank absorbance range are stored is determined (S05), and the measurement and storage of the water blank absorbance and the calculation and storage of the water blank absorbance range are repeated until the required number of pieces of data are accumulated. When the required number of pieces of data are accumulated, the control unit 22 calculates an index value of the reaction tank circulating water based on the water blank absorbance range accumulated in the storage device 23, and stores the calculated index value in the storage device 23 (S06). As the index, the index for the dissolved oxygen concentration described above is used. The control unit 22 compares the index value to a threshold (S07), and when the index value exceeds the threshold, the control unit 22 notifies the user of a water quality abnormality of the reaction tank circulating water (S08). The threshold for the abnormality determination may be set to a fixed value, or may be set based on by requiring a distribution of normal data in the analyzer. For example, a standard deviation SD of the water blank absorbance range is calculated from a plurality of pieces of measurement data collected in a state where the analyzer is normal after maintenance of the reaction tank, and is multiplied by a set coefficient C to obtain a threshold (C × SD). The threshold is updated whenever the maintenance of the reaction tank is performed.

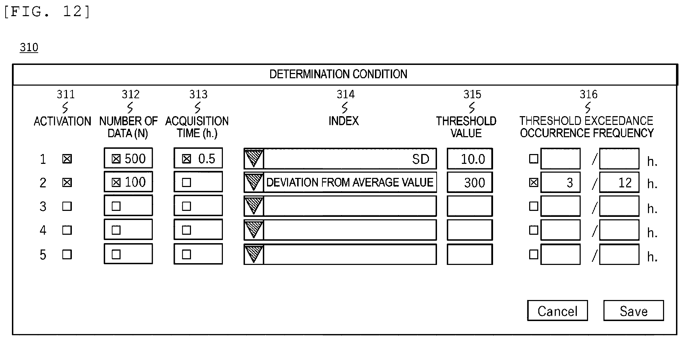

Fig. 12 illustrates an example of GUI for setting determination conditions in Step S07. In Step S07, one determination condition may be set to determine whether the condition is satisfied, or a plurality of determination conditions may be set to determine whether a combination of the conditions (for example, AND condition or OR condition) is satisfied. Therefore, the plurality of determination conditions can be set in the GUI. An activation setting unit 311 sets whether to use the condition for the determination in Step S07. A data number setting unit 312 sets the number of pieces of data required for the determination in Step S05. In this GUI, an acquisition time of photometry data can also be set by an acquisition time setting unit 313 instead of setting the number of pieces of data. In a case where both of the data number setting unit 312 and the acquisition time setting unit 313 are set as in a determination condition 1, when any one of the conditions is satisfied in Step S05, it is determined that the required number of pieces of data of the water blank absorbance range are accumulated. An index setting unit 314 sets an index used for the determination in Step S07, and a threshold setting unit 315 sets a threshold used for the determination in Step S07. When a frequency at which the threshold is exceeded is used as the determination condition, a threshold exceedance occurrence frequency setting unit 316 can set a threshold for a frequency at which the threshold exceedance occurs. As a result, for example, in a determination condition 2, a determination condition is set to determine an abnormality when a frequency at which a deviation from the average value exceeds 300 is three times or more within 12 hours.

When the water quality abnormality of the reaction tank circulating water is detected, the water quality abnormality can be output to a display 24 or a printer 25 to warn the user. In addition, by imparting a function of adding and recording not only the measurement data but also the alarm information to the storage device 23 and subsequently referring to the accumulated data, abnormality history can be analyzed from the measurement data. As a result, the measurement reliability can be improved. Further, the accumulated data may be transmitted to a service location via a communication line to monitor the state of the automatic analyzer at the service location. As a result, a countermeasure such as an instruction for maintenance or component replacement can be taken at an early stage, and the reliability of the analyzer can be improved.

The water quality abnormality of the reaction tank circulating water is determined based on the water blank absorbance. Therefore, as factors that cause the abnormality, not only the malfunction of the degassing device but also deficiency in the surfactant concentration in the reaction tank circulating water can be considered. When the reaction tank circulating water 112 overflows from the reaction tank 18, water is replenished such that the surfactant concentration in the reaction tank circulating water 112 gradually decreases. When the surfactant concentration decreases, bubbles are likely to be attached to a window of the reaction vessel or the reaction tank. In this case, the water blank absorbance range is expected to be improved by the addition of the surfactant. Therefore, when the abnormality determination is made in Step S07, a step of adding the surfactant to the reaction tank circulating water 112 may be provided. The surfactant is added, the water blank absorbance is measured again, and the index value is calculated to perform the abnormality determination (S01 to S07). When the index value indicates an abnormality even after the abnormality determination, an alarm is generated and notified to the user (S08).

In addition, when floating matter such as trash is present in the reaction tank circulating water 112, the amount of the reaction tank circulating water 112 increases. Therefore, the reaction tank circulating water 112 may be improved by performing maintenance such as the water replacement of the reaction tank or the cleaning of the reaction tank. Therefore, by storing and monitoring the operational situation of the maintenance together with the water blank absorbance range, the determination of the water quality abnormality can be made more appropriately.

That is, in the present embodiment, the water quality abnormality of the reaction tank circulating water 112 is determined based on the water blank absorbance range. As factors that worsen the water blank absorbance range, some factors can be considered, and methods of resolving abnormality caused by the factors are different. Accordingly, an alarm may be output by determining the water quality in consideration of past operation history in the automatic analyzer. As a result, when an abnormality is highly likely to occur in the degassing device, the abnormality can be narrowed to output an alarm. To that end, it can be considered to use an abnormality determination algorithm by machine learning for the determination of the water quality abnormality of the reaction tank circulating water 112.

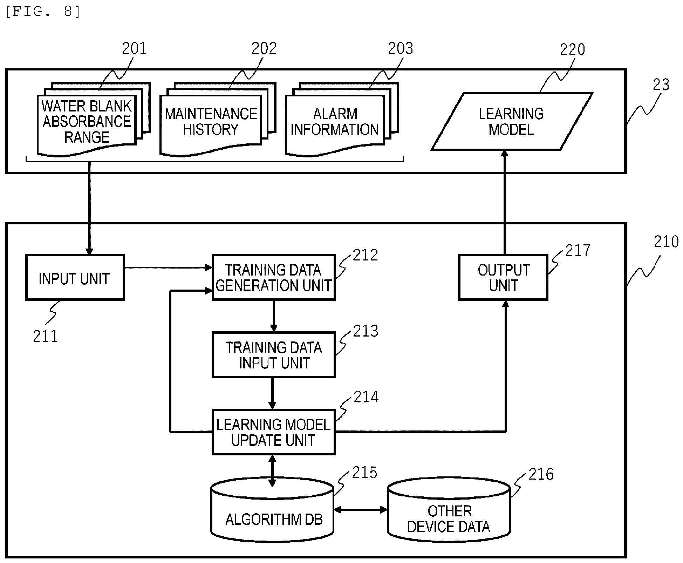

Fig. 8 is a functional block diagram for generating and updating a learning model using a learning device 210. The learning device 210 is implemented by a processing device (processor) executing a program stored in a storage device of the learning device 210. A physical configuration of the learning device 210 may be configured by a simple server or PC (Personal Computer) or may be configured by a plurality of servers to which any part of the processing device or the storage device is connected via a network. In addition, the same functions as all or some of the functions configured by software may be implemented by hardware such as FPGA (Field Programmable Gate Array) or ASIC (Application Specific Integrated Circuit).

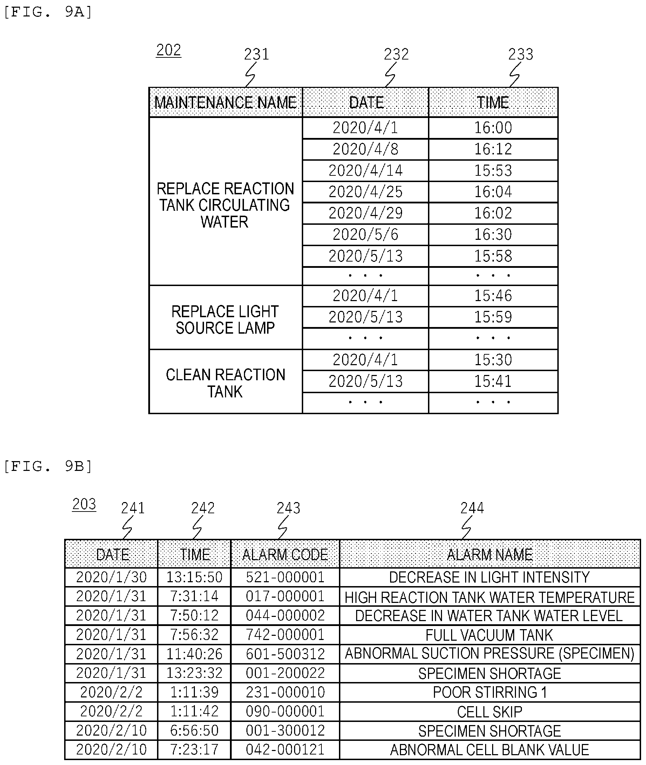

The learning device 210 acquires information related to the water quality of the reaction tank circulating water, for example, water blank absorbance range data 201, maintenance history data 202, and alarm information data 203 (the information will be collectively referred to as water quality related data) from the storage device 23 of the automatic analyzer. In addition, the water quality related data may include the water blank absorbance range data or index data calculated based on the water blank absorbance range data. Fig. 9A illustrates an example of the maintenance history data 202. The maintenance history data 202 includes a maintenance name 231 of the performed maintenance, and a date 232 and a time 233 at which the maintenance is performed. Fig. 9B illustrates an example of the alarm information data 203. The alarm information data 203 includes a date 241 and a time 242 at which the automatic analyzer outputs an alarm, an alarm code 243, and an alarm name 244.

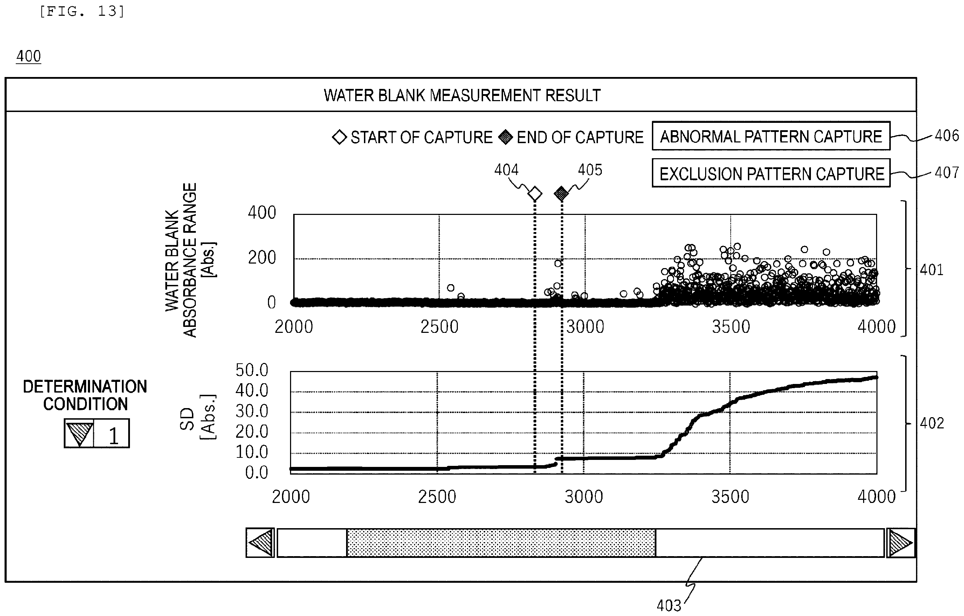

An input unit 211 acquires these pieces of data directly or via a network. A training data generation unit 212 generates training data from the data acquired by the input unit 211. Fig. 13 illustrates an example of GUI in which the training data generation unit 212 is displayed on a display unit of the learning device 210. In a training data capture screen 400, a graph 402 representing the transition of the index (the standard deviation of the water blank absorbance range) of the determination condition 1 illustrated in Fig. 12 is displayed below a graph 401 representing the transition of the water blank absorbance range. The two graphs 401 and 402 can be moved in conjunction with a display position by a slider 403. An operator cuts out appropriate training data for learning while seeing the transitions of the water blank absorbance range and the index. Specifically, by designating a capture start position 404 and a capture end position 405 on the graphs and pressing an abnormality pattern capture button 406, the water quality related data in this section can be captured as a pattern representing the water quality abnormality. Conversely, by pressing an exclusion pattern capture button 407, the water quality related data in this section can be captured as a pattern not representing the water quality abnormality. As a result, the notice of the operator can be reflected on the learning of the learning model.

A training data input unit 213 inputs the training data generated by the training data generation unit 212 to the learning model for determining the water quality abnormality, and a learning model update unit 214 updates the learning model. An updated learning model 220 is transmitted from an output unit 217 to the automatic analyzer, and the control unit 22 determines the performance of the degassing device using the learning model 220. An original form of the learning model used for determining the performance of the degassing device is accumulated in an algorithm database 215. In order to improve the accuracy of the learning model, it is necessary to learn using as much training data as possible. Therefore, the same data is collected from another automatic analyzer and is stored in other device data database 216. The learning model accumulated in the algorithm database 215 is generated based on the training data from the other device data database 216. When the learning model update unit 214 updates the learning model and the algorithm of the learning model is changed, change information is fed back to the training data generation unit 212, and a training data generation condition of the training data generation unit 212 is updated.

As the learning model 220, any learner such as a neural network, a regression tree, or a Bayes identifier can be used. Fig. 10 illustrates an example of a learning model using a neural network. In a learning model 90, information input to an input layer 91 propagates to an intermediate layer 92, the information further propagates to an output layer 93, and an inference result based on the information input from the output layer 93 to the input layer 91 is output. Each of the input layer 91, the intermediate layer 92, and the output layer 93 include a plurality of input units, a plurality of intermediate units, and a plurality of output units represented by circles. Typically, a plurality of intermediate layers are provided in a neural network. However, the intermediate layer 92 is representatively illustrated in the drawing. The information input to each of the input units of the input layer 91 is weighted by a coupling coefficient between the input unit and the intermediate unit and is input to each of the intermediate units. The value of the intermediate unit of the intermediate layer 92 is calculated by adding the value from the input unit. In addition, the output of each of the intermediate units of the intermediate layer 92 is weighted by a coupling coefficient between the intermediate unit and the output unit and is input to each of the output units. The value of the output unit of the output layer 93 is calculated by adding the value from the intermediate unit. This way, the process in the intermediate layer 92 corresponds to a process of nonlinearly converting the value of input data input to the input layer 91 to output output data of the output layer 93.

The learning model 90 is a learning model related to "degassing performance determination" as the output data, and is illustrated together with examples of input and output data. Both of the input and output data are exemplary. The water quality related data (or processed data thereof; hereinafter, also referred to as the water quality related data without being distinguished) is input to the input layer 91, and an operation result corresponding to the input is output from the output layer 93. Examples of the data input to the input layer 91 include the water blank absorbance and the water blank absorbance range (maximum value - minimum value) defined for each of the learning models and measurement result information 94 such as a frequency at which the value of the water blank absorbance range is an abnormal value, and device related information 95 including the operational situation of maintenance by the user and information on an alarm history that has been generated thus far. Examples of the maintenance include operations that may affect the degassing performance, for example, the water replacement of the reaction tank, the cleaning of the reaction tank, and the replacement of the degassing device. In addition, the information on the alarm history includes various levels of alarms. For example, there is a case where the maintenance is necessary to cancel the alarm or a case where the maintenance is not immediately necessary but the alarm is at an attention level that requires observation.

The output data from the output layer 93 is an inference result for a degassing performance determination result 97 and a cause of abnormality 98, and the necessity of an action on the degassing device 102 can be determined based on this result. An output value such as "degassing performance deteriorated (alarm level)", "degassing performance attention required", or "degassing performance normal" that is output data of a degassing performance determination result 97 is a probability value, and is determined based on whether the output probability value is a predetermined threshold or more. The cause of abnormality 98 implies the occurrence of an abnormality due to a factor other than the degassing device. For example, the occurrence of an abnormal value caused by a cause of abnormality other than the degassing performance, for example, the clogging of the reaction tank such as contamination or trash or the light source lamp can be inferred.

### Reference Signs List

- 1:: reaction vessel
- 2:: reaction disk
- 3:: light source lamp
- 4:: diffraction grating for spectroscopy
- 5:: photodetector
- 6:: constant temperature water supply device
- 7:: sample cup
- 8:: sample disk
- 9:: reagent bottle
- 10:: reagent disk
- 11:: sample dispensing mechanism
- 12:: reagent dispensing mechanism
- 13:: stirring mechanism
- 14:: sample dispensing pump
- 15:: pure water pump for cleaning
- 16:: reagent dispensing pump
- 17:: cleaning mechanism
- 18:: reaction tank
- 20:: AD conversion unit
- 22:: control unit
- 23:: storage device
- 24:: display
- 25:: printer
- 26:: keyboard
- 27:: interface bus
- 90:: learning model
- 91:: input layer
- 92:: intermediate layer
- 93:: output layer
- 94:: measurement result information
- 95:: device related information
- 97:: degassing performance determination result
- 98:: cause of abnormality
- 102:: degassing device
- 103:: vacuum pump
- 104:: cooling device
- 105:: circulation pump
- 106:: heating device
- 107:: water supply tank
- 108:: water supply pump
- 109:: water supply solenoid valve
- 110:: drainage solenoid valve
- 111:: reaction solution
- 112:: reaction tank circulating water
- 120:: flow path
- 121:: container
- 201:: water blank absorbance range data
- 202:: maintenance history data
- 203:: alarm information data
- 210:: learning device
- 211:: input unit
- 212:: training data generation unit
- 213:: training data input unit
- 214:: learning model update unit
- 215:: algorithm database
- 216:: other device data database
- 217:: output unit
- 220:: learning model
- 231:: maintenance name
- 232,: 241: date
- 233,: 242: time
- 243:: alarm code
- 244:: alarm name
- 300:: measurement condition setting screen
- 301:: measurement condition setting unit
- 302:: exclusion condition setting unit
- 310:: determination condition setting unit
- 311:: activation setting unit
- 312:: data number setting unit
- 313:: acquisition time setting unit
- 314:: index setting unit
- 315:: threshold setting unit
- 316:: threshold exceedance occurrence frequency setting unit
- 400:: training data capture screen
- 401,: 402: graph
- 403:: slider
- 404:: capture start position
- 405:: capture end position
- 406:: abnormality pattern capture button
- 407:: exclusion pattern capture button
- 501,: 502: graph

## Claims

1. An automatic analyzer comprising:
a reaction tank;
a reaction disk that holds a reaction vessel in a state of being immersed in a reaction tank circulating water in the reaction tank;
a circulation flow path that adjusts a temperature of the reaction tank circulating water from the reaction tank and returns the reaction tank circulating water to the reaction tank;
a degassing device provided in the circulation flow path to degas the reaction tank circulating water;
a photometer including a light source lamp and a photodetector that detects light emitted from the light source lamp and transmitted through the reaction vessel; and
a control unit that controls a sequence of analyzing a sample and analyzes the sample,
wherein, prior to dispensing the sample into the reaction vessel and performing sample measurement, the control unit dispenses pure water into the reaction vessel to perform water blank measurement, corrects absorbance data of a reaction solution of the sample and a reagent measured by sample measurement with water blank absorbance data measured by the water blank measurement, and analyzes the sample based on the corrected absorbance data, and
the control unit determines a water quality abnormality of the reaction tank circulating water based on the water blank absorbance data measured by the water blank measurement.

2. The automatic analyzer according to claim 1,
wherein, in the single water blank measurement, the control unit performs a plurality of measurements on the reaction vessel into which the pure water is dispensed, stores, in a storage device, water blank absorbance range data which is a difference between a maximum value and a minimum value of the water blank absorbance data in the plurality of measurements, and determines a water quality abnormality of the reaction tank circulating water based on an index calculated by statistically processing a predetermined number of pieces of the water blank absorbance range data.

3. The automatic analyzer according to claim 1,
wherein, when determining the water quality abnormality of the reaction tank circulating water, the control unit adds alarm information indicating the water quality abnormality of the reaction tank circulating water to an analysis result of the sample.

4. The automatic analyzer according to claim 2,
wherein the index is an average value or a standard deviation of the water blank absorbance range data.

5. The automatic analyzer according to claim 2,
wherein whether the water quality abnormality of the reaction tank circulating water is determined based on a frequency with which the index exceeds a threshold.

6. The automatic analyzer according to claim 1,
wherein, when determining the water quality abnormality of the reaction tank circulating water, the control unit adds a surfactant to the reaction tank circulating water.

7. The automatic analyzer according to claim 2,
wherein the photometer includes a diffraction grating that separates the light transmitted through the reaction vessel into wavelength components, and
the control unit can select the water blank absorbance data used for calculating the index based on a wavelength of the light used for the water blank measurement, and can exclude the water blank absorbance data used for calculating the index based on an elapsed time after a replacement of the reaction tank circulating water or an elapsed time after a start of lighting of the light source lamp.

8. The automatic analyzer according to claim 2,
wherein the control unit statistically processes a predetermined number of pieces of the water blank absorbance range data to calculate a first index and a second index, and determines the water quality abnormality of the reaction tank circulating water by combining a first determination condition using the first index or a second determination condition using the second index.

9. The automatic analyzer according to claim 1,
wherein, in the single water blank measurement, the control unit performs a plurality of measurements on the reaction vessel into which the pure water is dispensed, and determines a performance of the degassing device by using a learning model to which the water blank absorbance data, water blank absorbance range data, which is a difference between a maximum value and a minimum value of the water blank absorbance data in the plurality of measurements, maintenance history data related to a water quality of the reaction tank circulating water, and alarm information data related to the water quality of the reaction tank circulating water are input.

10. The automatic analyzer according to claim 9,
wherein the learning model includes, in an input, an index calculated by statistically processing a predetermined number of pieces of the water blank absorbance range data.

11. The automatic analyzer according to claim 9,
wherein the learning model is updated by using, as training data, the water blank absorbance data, the water blank absorbance range data, the maintenance history data, and the alarm information data, which is cut out based on an index calculated by statistically processing a predetermined number of pieces of the water blank absorbance range data.
